# FASCICULE DE BREVET EUROPEEN

(11) **EP 3 385 217 B1**
(45) Date de publication et mention de la délivrance du brevet: **01.05.2019**
(21) Numéro de dépôt: 18165934.3
(22) Date de dépôt: 05.04.2018
(51) Int. Cl.: B67D 7/02, B67D 7/36, F16K 31/12, F16K 31/122, F16K 27/02

(54) **VANNE ET PROCÉDÉ DE REMPLISSAGE HAUT DÉBIT**
VENTIL UND VERFAHREN ZUM BEFÜLLEN MIT HOHEM DURCHSATZ
HIGH FLOW FILLING VALVE AND METHOD

(30) Priorité: 07.04.2017 FR 1753049
(43) Date de publication de la demande: 10.10.2018
(73) Titulaire: Fives Filling & Sealing, 44140 Le Bignon (FR)
(72) Inventeur: GOASGUEN, Jacques, 44140 Le Bignon (FR)
(74) Mandataire: Lavoix

(56) Documents cités:
- EP-A1- 2 816 265
- WO-A2-2009/035926
- DE-U1- 9 406 842

## Description

La présente invention concerne un équipement et un procédé destinés à transférer un fluide d'une unité de remplissage vers un réservoir ou un conduit aval. Elle trouve notamment une application pour le transfert de fluides tels que du liquide de frein, de climatisation ou de refroidissement, vers le circuit fluidique correspondant d'un véhicule automobile, par exemple sur une chaine d'assemblage automobile, ou encore dans le secteur de l'énergie pour le remplissage de radiateurs électrique à fluide.

En plus de pouvoir gérer efficacement les ouvertures et les fermetures de connexions fluidiques garantissant la sécurité des opérateurs, l'ergonomie de travail et le bon dosage de fluide transféré dans les réservoirs ou conduit aval, les équipements de remplissage doivent être adaptés aux volumes unitaires à transférer. D'un point de vue économique, plus le volume à déplacer est large, plus le dimensionnement des équipements doit être optimisé pour limiter le temps de chargement. De plus, la maintenance doit être facilitée pour limiter le temps perdu sur la chaine de production. A cette fin, les équipements de remplissage sont munis de vannes permettant de bloquer ou d'ouvrir les connexions fluidiques à la demande de l'opérateur. Ces vannes sont pilotées par des systèmes hydrauliques ou des systèmes pneumatiques, ou par des systèmes électriques.

Le document EP 2 816 265 A1 divulgue un équipement selon le préambule de la revendication 1.

On connaît US6257285 qui présente un outil d'évacuation et de chargement de fluide dans un système fluidique. Cette solution permet de limiter l'encombrement et le poids de l'outil mais ne s'intéresse pas au problème de maintenance et d'accessibilité des composants tels que les vannes. Il est nécessaire de démonter le châssis pour y avoir accès et celles-ci sont assemblées directement dans le châssis, ce qui peut occasionner la perte de petites pièces lors du démontage desdites vannes. Ces opérations de montage et de démontage sont assez fréquentes et sont chronophages pour les opérateurs.

La présente invention vise donc à pallier l'inconvénient précité, en proposant de simplifier l'extraction des vannes du châssis pour garantir un remplacement facile par l'opérateur, tout en maintenant les fonctionnalités et les performances de remplissage.

A cet effet, l'invention a pour objet un équipement pour transférer un fluide dans un réservoir ou un conduit aval, l'équipement comprenant :
- une vanne piston ayant un corps et une tige munie en son bout d'un obturateur,
- un châssis définissant, d'une part un logement pour recevoir la vanne piston et d'autre part un passage amont pour le fluide destiné à être raccordé fluidiquement à une source de fluide, la vanne piston est mobile en translation selon une direction d'insertion D1, entre une position non insérée dans laquelle la vanne piston se situe à l'extérieur du logement, et une position insérée dans laquelle la vanne piston se situe dans le logement,
- un module définissant une cavité pour recevoir le fluide du passage amont et un passage d'évacuation aval destiné à être raccordé fluidiquement au réservoir ou conduit aval, l'entrée du passage d'évacuation définissant un siège de vanne destiné à recevoir l'obturateur de la vanne piston en position sortie, le module est mobile par rapport au châssis entre une position ouverte, autorisant l'insertion de la vanne piston dans le logement, et une position fermée dans laquelle le module est fixé au châssis.

Suivant certains modes particuliers de réalisation, l'équipement comprend en outre une ou plusieurs des caractéristiques suivantes, prise(s) isolément ou suivant toutes les combinaisons techniquement possibles :
- la vanne piston possède un système de pilotage pneumatique ou hydraulique de l'obturateur, le système de pilotage comporte un orifice d'alimentation défini par le corps, et deux joints d'étanchéité assurent l'étanchéité de l'orifice d'alimentation avec le châssis.
- deux joints d'étanchéité forment des lacets fermés autour de la direction axiale D1 et sont respectivement comprimés sensiblement selon la direction d'insertion D1 entre la vanne piston et le châssis, et entre la vanne piston et le module lorsque la vanne piston est en position insérée et le module en position fermée.
- le châssis défini au moins un canal amont destiné à être raccordé à une ligne d'aspiration de fluide et/ou de vide, ledit au moins un canal amont communique avec un canal aval du module, lui-même connecté au passage aval sous le siège de vanne.
- le au moins un canal amont débouche dans un logement apte à accueillir une vanne coaxiale, ladite vanne coaxiale étant de forme cylindrique et pourvue de joints d'étanchéité sur ses deux surfaces extrêmes A, B, opposées selon la direction d'insertion D2 et comprimés sensiblement selon la direction d'insertion D2 entre la vanne coaxiale et le châssis et entre la vanne coaxiale et le module lorsque la vanne coaxiale est en position insérée et le module en position fermée.
- les extrémités basses des vannes sont situées sur un même plan P lorsqu'elles sont en position insérée et en ce que le module en position fermé s'applique sur ce plan P de sorte de maintenir lesdites vannes dans leurs logements respectifs.
- les vannes sont dépourvues de système de fixation dans le châssis et en ce qu'en position ouverte le module autorise la libération des vannes de leurs logements.

L'invention concerne aussi un procédé pour transférer un fluide dans un réservoir ou dans un conduit aval comprenant les étapes suivantes :
- fourniture d'une vanne piston ayant un corps et une tige munie en son bout d'un obturateur,
- fourniture d'un châssis définissant d'une par un logement pour recevoir la vanne piston, et d'autre part un passage amont pour le fluide destiné à être raccordé fluidiquement à une source de fluide, la vanne piston est mobile en translation selon une direction d'insertion D1, entre une position non insérée dans laquelle la vanne piston se situe à l'extérieur du logement, et une position insérée dans laquelle la vanne se situe dans le logement,
- raccordement fluidique du passage amont à une source de fluide,
- fourniture d'un module définissant une cavité pour recevoir le fluide du passage amont et un passage d'évacuation aval destiné à être raccordé fluidiquement au réservoir ou conduit aval, l'entrée du passage d'évacuation aval définissant un siège de vanne destiné à recevoir l'obturateur de la vanne piston en position sortie, le module étant mobile par rapport au châssis entre une position ouverte, autorisant l'insertion de la vanne piston dans le logement, et une position fermée dans laquelle le module est fixé au châssis.
- raccordement fluidique du passage aval au réservoir ou conduit aval.

Suivant certains modes particuliers de mise en oeuvre, le procédé comprend en outre une ou plusieurs des étapes suivantes, prise(s) isolément ou suivant toutes les combinaisons techniquement possibles :
- Fourniture d'un système de pilotage pneumatique ou hydraulique de l'obturateur,
- Pilotage de la vanne piston avec le système de pilotage pour faire passer l'obturateur de la vanne piston de la position sortie à la position rentrée permettant le passage du fluide du canal amont au canal d'évacuation aval.

Les caractéristiques et avantages de l'invention apparaîtront à la lecture de la description qui va suivre, donnée uniquement à titre d'exemple, et non limitative, en référence aux dessins annexés, sur lesquels :
- la figure 1 est une vue en coupe d'un ensemble selon l'invention en position fermée,
- la figure 2 est une vue en coupe de ce même ensemble selon l'invention en position ouverte,
- la figure 3 est une vue partielle en coupe axiale de l'ensemble selon l'invention.

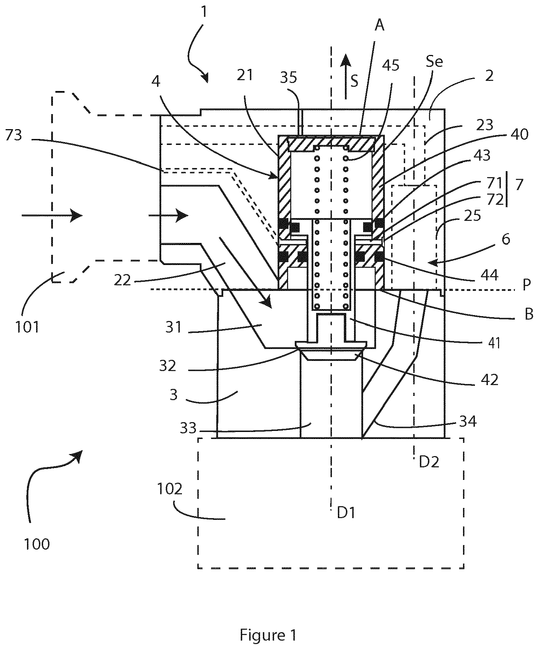

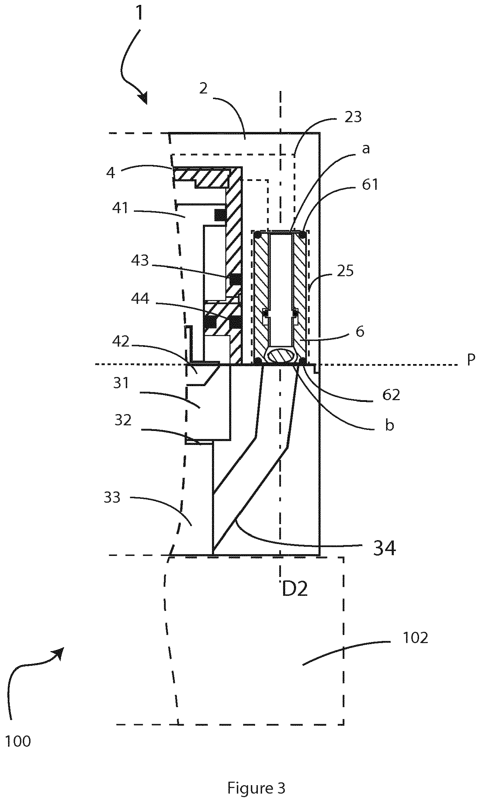

En référence aux figures 1, 2 et 3, on décrit un ensemble 100 selon l'invention. L'ensemble 100 concerne par exemple le secteur automobile et appartient avantageusement à une chaine de montage (non représentée) de véhicules automobiles (non représentés). L'invention s'applique néanmoins à tous les secteurs impliquant le remplissage de fluides, notamment le secteur de l'énergie pour le remplissage des radiateurs électriques à fluides.

L'ensemble 100 comprend un réservoir ou un conduit aval 102, une source de fluide 101, et un équipement 1, objet de l'invention, pour transférer du fluide dans le réservoir 102 à partir de la source de fluide 101. Dans la variante où l'élément 102 est un conduit aval, ce dernier transfère le fluide par exemple à un réservoir à remplir.

Le fluide est par exemple du liquide de refroidissement, du liquide de climatisation ou du liquide de frein.

La source de fluide 101 est une unité de distribution du fluide, connue en elle-même. L'équipement 1 est destiné à permettre un remplissage au moins partiel du réservoir 102 ou le transfert d'au moins une partie du fluide vers un conduit aval.

L'équipement 1 comprend d'une part un châssis 2 définissant un passage amont 22 raccordé fluidiquement à la source de fluide 101, et, d'autre part, un logement 21 destiné à recevoir une vanne piston 4 selon une direction d'insertion D1. La vanne piston 4 est munie d'un obturateur 42 en bout de tige 41 de piston, d'un corps 40 et de joints d'étanchéité 43 et 44 permettant de faire l'étanchéité au contact du châssis 2 entre ces deux joints.

L'équipement 1 comprend également un module 3 définissant un passage aval 33 précédé d'une cavité 31. Le passage aval 33 peut être raccordé à un tube plongeur allant dans le réservoir 102. Ladite cavité 31 recevant le fluide du passage amont 22 avant son écoulement dans le passage aval 33. L'entrée du passage aval 33 défini un siège de vanne 32 pour recevoir l'obturateur 42 de la vanne piston 4.

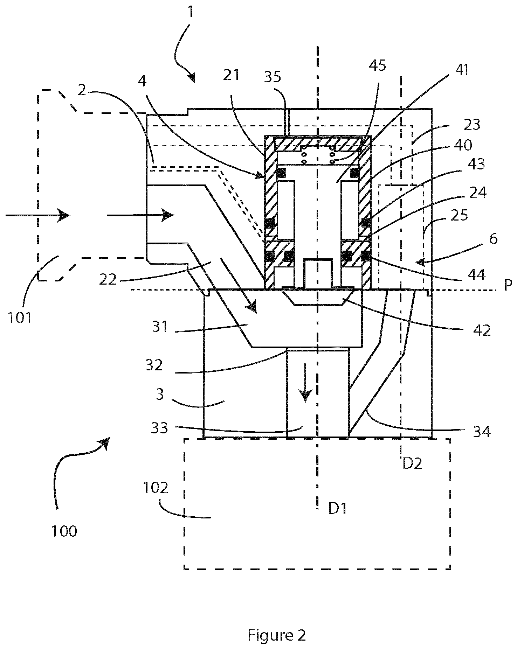

La vanne piston 4 possède un système de pilotage 7 pneumatique ou hydraulique de l'obturateur 42. Une chambre 71, définie entre la tige 41 de piston et le corps 40, est alimentée pneumatiquement ou hydrauliquement par un orifice d'alimentation 72 défini par le corps 40. Ce système 7 de pilotage est alimenté par un conduit 73 d'alimentation dans le châssis 2. Par ce système de pilotage 7, la tige 41 de piston, mobile axialement par rapport au corps 40, remonte en position rentrée lorsque la chambre 71 est remplie (figure 2). Un conduit d'évacuation d'air 35 permet de libérer la pression lors de la remontée de la tige de piston 41. La dite tige 41 redescend en position sortie lorsque la chambre 71 est vidée. Un système de renvoi, par exemple un ressort 45, fait redescendre le piston 41 dans sa position sortie. Dans cette position sortie, l'obturateur 42 vient se positionner sur le siège de vanne 32 et ferme ainsi l'accès au passage aval 33.

Avantageusement, le passage amont 22, la cavité 31 et le passage aval 33 permettent de laisser passer un haut débit de fluide par leurs dimensions. L'obturateur 42 est donc proportionnel au diamètre du passage aval 33 et du siège de vanne 32.

La vanne piston est mobile par rapport au châssis 2, par exemple en translation, selon la direction D1 entre une position non insérée et une position insérée dans laquelle la vanne piston 4 se situe dans le logement 21. Dans la position non insérée (non représentée), la vanne piston 4 se situe à l'extérieur du logement 21. La position non insérée se déduit de la position insérée représentée sur les figures 1 et 2 par une translation de la vanne par rapport au châssis 2 selon la direction d'insertion D1. La vanne piston 4 s'insère dans le sens figuré par une flèche S sur la figure 1, et s'enlève du logement 21 dans le sens opposé à la flèche S, comme une cartouche.

La vanne piston 4 comprend deux surfaces extrêmes A, B, opposées selon la direction d'insertion D1, et une surface latérale externe Se s'étendant axialement entre les deux surfaces extrêmes et sensiblement parallèle à la direction d'insertion D1. Les surfaces extrêmes A, B sont avantageusement planes et perpendiculaires à la direction d'insertion D2. Le corps 40 est par exemple de forme cylindrique. Le corps 40 comprend des joints d'étanchéité 43 et 44 qui assurent l'étanchéité de la connexion entre l'orifice d'alimentation 72 et le conduit 73 d'alimentation du châssis 2. Dans une variante de mise en oeuvre (non représentée), un seul joint circulaire peut être utilisé pour réaliser cette étanchéité de l'orifice d'alimentation au contact du châssis 2, le joint circulaire est alors axialement centré sur le l'entrée de l'orifice 72.

Le module 3 est mobile par rapport au châssis 2 entre une position ouverte (non représentée), autorisant l'insertion de la vanne piston 4 dans le logement 21, et une position fermée (figure 1 et 2) dans laquelle le module 3 est fixé sur le châssis 2. Le module 3 forme par exemple un embout adapté pour être fixé sur le réservoir 102 ou conduit aval 102. Le module 3 est par exemple articulé sur le châssis 2 par une charnière (non représentée).

La position ouverte du module 3 par rapport au châssis 2 permet l'accès simplifié à la vanne piston 4. L'opérateur peut alors extraire la vanne piston 4 en attrapant la tige 41 et son obturateur 42. En position fermée du module 3, la vanne piston 4 est enfoncée dans son logement 21 de sorte que ses extrémités A et B soient au contact respectivement du châssis 2 et du module 3. Le module 3 en position fermée maintient en place la vanne piston dans son logement 21.

Dans une variante de réalisation de l'invention, le châssis 2 accueille un canal amont 23 destiné à être raccordé à une ligne d'aspiration de fluide ou de vide. Ce canal 23 communique avec un canal aval 34 situé dans le module 3. Avantageusement, le canal aval 34 est raccordé au passage 33 sous le siège de vanne 32.

Pour contrôler l'aspiration ou le vide, on utilise une vanne axiale 6, définissant un passage axial et située dans un logement 25 sur le trajet du canal 23 dans le châssis 2. Cette vanne axiale 6 est pilotée par un système de pilotage pneumatique ou hydraulique dédié (non représenté). La vanne axiale 6 est de type cartouche car elle s'introduit dans le logement 25 par translation selon la direction D2 lorsque le module 3 est en position ouverte. Des joints 61 et 62 d'étanchéité en lacet situés sur les surfaces extrêmes a et b, perpendiculaires à la direction d'insertion D2, de la vanne axiale 6 assurent l'étanchéité au contact du châssis 2 et du module 3 lorsque celui-ci est en position fermée et compresse sensiblement les joints 61 et 62.

Avantageusement l'équipement 1 peut comporter plusieurs vannes 6 et donc plusieurs canaux 23 pour séparer, par exemple, la fonction vide et la fonction ré-aspiration du fluide dans le réservoir 102.

D'un point de vue pratique, les vannes présentes dans le châssis 2 ont leurs extrémités basses B et b situées sur le même plan P lorsqu'elles sont en position insérée. Le module 3, lorsqu'il est en position fermée, s'applique sur ce plan P de sorte d'appliquer une pression dans les directions D1 et D2 pour comprimer les joints d'étanchéités 61 et 62 et/ou maintenir les vannes 4 et 6 dans le fond de leur logement respectif.

Selon une variante non représentée de l'invention, les joints d'étanchéité 43 et 44 destinés à la connexion entre l'orifice d'alimentation 72 et le conduit d'alimentation 73 sont situés respectivement sur les surfaces extrêmes A et B de la vanne piston 4. Ainsi, lorsque la vanne piston 4 est dans sa position insérée, les joints 43 et 44 d'étanchéité sont respectivement comprimés sensiblement selon la direction d'insertion D1 entre la vanne piston 4 et le châssis 2 et entre la vanne piston 4 et le module 3, lorsque le module est en position fermée.

L'équipement 1 facilite la mise en place et le remplacement des vannes 4 et 6 par les opérateurs. Dans une phase initiale, l'opérateur introduit la vanne 4 et, suivant la configuration de l'équipement 1, la ou les vannes 6, jusqu'à la butée au fond de leurs logements 21 et 25. Les joints 43, 44 viennent au contact du châssis 2 au niveau de la paroi interne du logement 4. Le joint 61 vient en contact avec le fond du logement 25 au niveau de la connexion avec le canal amont 23. L'opérateur fixe le module 3 sur le châssis 2, enfermant ainsi la ou les vannes 4, 6 à l'intérieur de l'équipement 1. Le joint 62 vient en contact avec le module 3 au niveau de la connexion avec le canal aval 34. En fixant le module 3 sur le châssis 2, une pression mécanique s'exerce sur les extrémités des vannes 4 et 6 selon les directions d'insertion D1 et D2 et comprime les joints 62 ,61 et éventuellement 43, 44 lorsqu'ils sont situés sur les extrémités A et B de la vanne piston 4, ce qui assure l'étanchéité des vannes et des systèmes de pilotage dans l'équipement 1. L'équipement 1 est prêt à être utilisé par l'opérateur.

Par l'intermédiaire de commandes de pilotage présentes sur l'équipement 1 ou sur la machine de remplissage, l'opérateur actionne la remontée de la tige de piston 41 et de l'obturateur 42 par l'injection de fluide dans le système de pilotage 7, ce qui ouvre le passage aval 33 et assure une continuité fluidique entre le passage amont 22, la cavité 31 et le passage aval 33. Une étape de vide peut être lancée en pilotant la vanne 6 préalablement à l'étape de remplissage. De même, une étape d'aspiration peut aussi être menée grâce au pilotage de la vanne 6 après l'étape de remplissage.

Pour changer les vannes 4 et 6, l'opérateur met le module 3 dans la position ouverte, libérant ainsi les contraintes mécaniques sur les vannes 4 et 6. Sans contrainte, sur les surfaces extrêmes A, B, a et b, les vannes sortent simplement ou sous une action manuelle, de leurs logements respectifs 21, 25. L'accès aux vannes 4 et 6 est simultané.

Grâce aux caractéristiques décrites ci-dessus, l'équipement 1 simplifie l'extraction des vannes 4 et 6 du châssis et garantit un remplacement facile par l'opérateur tout en conservant les fonctionnalités et les performances des équipements de remplissage de l'art antérieur.

## Revendications

1. Equipement (1) pour transférer un fluide dans un réservoir (102) ou un conduit aval (102), l'équipement comprenant :
- une vanne piston (4) ayant un corps (40) et une tige (41) de piston munie en son bout d'un obturateur (42),
- un châssis (2) définissant d'une part un logement (21) pour recevoir la vanne piston (4), et d'autre part un passage amont (22) pour le fluide destiné à être raccordé fluidiquement à une source de fluide (101),
- un module (3) définissant un passage d'évacuation aval (33) destiné à être raccordé fluidiquement au réservoir ou conduit aval (102), l'entrée du passage d'évacuation (33) définissant un siège de vanne (32) destiné à recevoir l'obturateur (42) de la vanne piston (4) en position sortie,
**caractérisé en ce que** la vanne piston (4) est mobile en translation, selon une direction d'insertion (D1), entre une position non insérée dans laquelle la vanne piston (4) se situe à l'extérieur du logement (21), et une position insérée dans laquelle la vanne piston (4) se situe dans le logement (21),
**en ce que** le module (3) définit une cavité (31) pour recevoir le fluide du passage amont (22), et
**en ce que** le module (3) est mobile par rapport au châssis (4) entre une position ouverte, autorisant l'insertion de la vanne piston (4) dans le logement (21), et une position fermée dans laquelle le module (3) est fixé au châssis (2).

2. Equipement (1) selon la revendication 1, **caractérisé en ce que** la vanne piston (4) possède un système (7) de pilotage pneumatique ou hydraulique de l'obturateur (42), le système (7) de pilotage comportant un orifice d'alimentation (72) défini par le corps (40), et **en ce que** deux joints d'étanchéité (43,44) assurent l'étanchéité de l'orifice d'alimentation (72) avec le châssis (2).

3. Equipement (1) selon la revendication 1, **caractérisé en ce que** deux joints d'étanchéité (43, 44) forment respectivement des lacets fermés autour de la direction axiale (D1) et étant respectivement comprimés sensiblement selon la direction d'insertion (D1) entre la vanne piston (4) et le châssis (2) et entre la vanne piston (4) et le module (3) lorsque la vanne piston (4) est en position insérée et le module (3) en position fermée.

4. Equipement (1) selon l'une quelconque des revendications 1 et 2, **caractérisé en ce que** le châssis (2) définit au moins un canal amont (23) destiné à être raccordé à une ligne d'aspiration de fluide et/ou de vide, ledit au moins un canal amont (23) communique avec un canal aval (34) du module (3), lui-même connecté au passage aval (33) sous le siège de vanne (32).

5. Equipement (1) selon la revendication 4, **caractérisé en ce que** le au moins un canal amont (23) débouche dans un logement (25) apte à accueillir une vanne coaxiale (6), ladite vanne coaxiale (6) étant de forme cylindrique et pourvue de joints d'étanchéité (61, 62) sur ses deux surfaces extrêmes (a, b) opposées selon la direction d'insertion (D2) et comprimés sensiblement selon la direction d'insertion (D2) entre la vanne coaxiale (6) et le châssis (2) et entre la vanne coaxiale (6) et le module (3) lorsque la vanne coaxiale (6) est en position insérée et le module en position fermée.

6. Equipement (1) selon la revendication 5, **caractérisé en ce que** les extrémités basses des vannes (4, 6) sont situées sur un même plan (P) lorsqu'elles sont en position insérée et **en ce que** le module (3) en position fermé s'applique sur ce plan (P) de sorte de maintenir lesdites vannes (4,6) dans leurs logements respectifs (21, 25).

7. Equipement (1) selon la revendication 6, **caractérisé en ce que** les vannes (4,6) sont dépourvues de système de fixation dans le châssis (2) et **en ce qu'**en position ouverte le module (3) autorise la libération des vannes (4, 6) de leurs logements.

8. Procédé pour transférer un fluide dans un réservoir (102) ou dans un conduit aval (102) comprenant les étapes suivantes :
- fourniture d'une vanne piston (4) ayant un corps (40) et une tige (41) de piston munie en son bout d'un obturateur (42),
- fourniture d'un châssis (3) définissant d'une part un logement (21) pour recevoir la vanne piston (4), et d'autre part un passage amont (22) pour le fluide et étant destiné à être raccordé fluidiquement à une source de fluide (101), la vanne piston (4) étant mobile en translation selon une direction d'insertion D1, entre une position non insérée dans laquelle la vanne piston (4) se situe à l'extérieur du logement (21), et une position insérée dans laquelle la vanne (4) se situe dans le logement (21),
- raccordement fluidique du passage amont (101) à une source de fluide,
- fourniture d'un module (3) définissant une cavité (31) pour recevoir le fluide du passage amont (22) et un passage d'évacuation aval (33) destiné à être raccordé fluidiquement au réservoir (101) ou conduit aval, l'entrée du passage d'évacuation aval (33) définissant un siège de vanne (32) destiné à recevoir l'obturateur (42) de la vanne piston (4) en position sortie, le module (3) étant mobile par rapport au châssis (2) entre une position ouverte, autorisant l'insertion de la vanne piston (4) dans le logement, et une position fermée dans laquelle le module (3) est fixé au châssis (2),
- raccordement fluidique du passage aval (33) au réservoir (102) ou conduit aval (102).

9. Procédé pour transférer un fluide dans un réservoir ou dans un conduit aval selon la revendication 8, caractérisé en ce qu"il comprend les étapes suivantes :
- Fourniture d'un système (7) de pilotage pneumatique ou hydraulique de l'obturateur (42),
- Pilotage de la vanne piston (4) avec le système de pilotage (7) pour faire passer l'obturateur (42) de la vanne piston (4) de la position sortie à la position rentrée permettant le passage du fluide du canal amont (22) au canal d'évacuation aval (33).

## Patentansprüche

1. Einrichtung (1) zum Transferieren eines Fluid in ein Reservoir (102) oder eine Stromabwärts-Leitung (102), wobei die Einrichtung aufweist:
- ein Kolbenventil (4) mit einem Körper (40) und einer Kolbenstange (41), die an ihrem Ende mit einem Absperrorgan (42) versehen ist,
- ein Gehäuse (2), das einerseits eine Aufnahme (21) zum Aufnehmen des Kolbenventils (4) und andererseits eine Stromaufwärts-Passage (22) für das Fluid definiert, die dazu bestimmt ist, mit einer Fluidquelle (101) fluidverbunden zu sein,
- ein Modul (3), das eine Stromabwärts-Abführpassage (33) definiert, die dazu bestimmt ist, mit dem Reservoir oder der Stromabwärts-Leitung (102) fluidverbunden zu sein, wobei der Eingang der Abführpassage (33) einen Ventilsitz (32) definiert, der dazu bestimmt ist, das Absperrorgan (42) des Ventilkolbens (4) in Ausgangsposition zu empfangen,
**dadurch gekennzeichnet, dass** der Ventilkolben (4) entlang einer Einsetzrichtung (D1) translationsbewegbar ist zwischen einer Nicht-eingesetzt-Position, in welcher sich der Ventilkolben (4) außerhalb der Aufnahme (21) befindet, und einer Eingesetzt-Position, in welcher sich der Ventilkolben (4) in der Aufnahme (21) befindet,
und dass das Modul (3) eine Kavität (31) definiert zum Empfangen des Fluid von der Stromaufwärts-Passage (22),
und dass das Modul (3) bezüglich des Gehäuses (4) bewegbar ist zwischen einer Offen-Position, welche das Einsetzen des Ventilkolbens (4) in die Aufnahme (21) erlaubt, und einer Geschlossen-Position, in welcher das Modul (3) an dem Gehäuse (2) fixiert ist.

2. Einrichtung (1) gemäß Anspruch 1, **dadurch gekennzeichnet, dass** der Ventilkolben (4) ein System (7) zur pneumatischen oder hydraulischen Ansteuerung des Absperrorgans (42) umfasst, wobei das System (7) zur Ansteuerung eine Versorgungsöffnung (72) aufweist, die von dem Körper (40) definiert ist, und dass zwei Dichtungen (43, 44) die Abdichtung der Versorgungsöffnung (72) mit dem Gehäuse (2) gewährleisten.

3. Einrichtung (1) gemäß Anspruch 1, **dadurch gekennzeichnet, dass** die beiden Dichtungen (43, 44) jeweils geschlossene Bänder um die Axialrichtung (D1) herum bilden und jeweils im Wesentlichen entlang der Einsetz-Richtung (D1) komprimierbar sind zwischen dem Ventilkolben (4) und dem Gehäuse (2) und zwischen dem Ventilkolben (4) und dem Modul (3), wenn der Ventilkolben (4) in der Eingesetzt-Position ist und das Modul (3) in der Geschlossen-Position ist.

4. Einrichtung (1) gemäß irgendeinem der Ansprüche 1 und 2, **dadurch gekennzeichnet, dass** das Gehäuse (2) wenigstens einen Stromaufwärts-Kanal (23) definiert, der dazu bestimmt ist, mit einer Fluid-Ansaug- und/oder Leer-Leitung verbunden zu sein, wobei der wenigstens eine Stromaufwärts-Kanal (23) mit einem Stromabwärts-Kanal (34) des Moduls (3) kommuniziert, welcher seinerseits mit der Stromabwärts-Passage (33) unter dem Ventilsitz (32) verbunden ist.

5. Einrichtung (1) gemäß Anspruch 4, **dadurch gekennzeichnet, dass** der wenigstens eine Stromaufwärts-Kanal (23) in einer Aufnahme (25) ausmündet, die imstande ist, ein koaxiales Ventil (6) aufzunehmen, wobei das koaxiale Ventil (6) eine zylindrische Gestalt hat und an seinen beiden in der Einsetzrichtung (D2) entgegengesetzten Endflächen (a, b) mit Dichtungen (61, 62) versehen ist, die im Wesentlichen entlang der Einsetz-Richtung (D2) komprimiert werden zwischen dem koaxialen Ventil (6) und dem Gehäuse (2) und zwischen dem koaxialen Ventil (6) und dem Modul (3), wenn das koaxiale Ventil (6) in der Einsetz-Position (6) und das Modul in der Geschlossen-Position ist.

6. Einrichtung (1) gemäß Anspruch 5, **dadurch gekennzeichnet, dass** die tiefergelegenen Enden der Ventile (4, 6) in einer selben Ebene (P) angeordnet sind, wenn sie in der Einsetz-Position sind, und dass das Modul (3) in der Geschlossen-Position an dieser Ebene (P) anliegt, um die besagten Ventile (4, 6) in deren jeweiligen Aufnahmen (21, 25) zu halten.

7. Einrichtung (1) gemäß Anspruch 6, **dadurch gekennzeichnet, dass** die Ventile (4, 6) mit einem System zur Fixierung in dem Gehäuse (2) ausgestattet sind und dass das Modul (3) in der Offen-Position die Freigabe der Ventile (4, 6) von deren Aufnahmen erlaubt.

8. Verfahren zum Transferieren eines Fluid in ein Reservoir (102) oder in eine Stromabwärts-Leitung (102), aufweisend die folgenden Schritte:
- Bereitstellen eines Kolbenventils (4), das einen Körper (40) und eine Kolbenstange (41) hat, die an ihrem Ende mit einem Absperrorgan (42) versehen ist,
- Bereitstellen eines Gehäuses (3), das definiert einerseits eine Aufnahme (21) zum Aufnehmen des Kolbenventils (4) und andererseits eine Stromaufwärts-Passage (22) für das Fluid, die dazu bestimmt ist, um mit einer Fluidquelle (101) fluidverbunden zu sein, wobei der Ventilkolben (4) entlang einer Einsetzrichtung D1 translationsbewegbar ist zwischen einer Nicht-eingesetzt-Position, in welcher der Ventilkolben (4) sich außerhalb der Aufnahme (21) befindet, und einer Eingesetzt-Position, in welcher sich das Ventil (4) in der Aufnahme (21) befindet,
- Fluidverbinden der Stromaufwärts-Passage (101) mit einer Fluidquelle,
- Bereitstellen eines Moduls (3), das eine Kavität (31) zum Empfangen des Fluid von der Stromaufwärts-Passage (22) und eine Stromabwärts-Abführpassage (33) definiert, die dazu bestimmt ist, um mit dem Reservoir (101) oder der Stromabwärts-Leitung fluidverbunden zu sein, wobei der Eingang der Stromabwärts-Abführpassage (33) einen Ventilsitz (32) definiert, der dazu bestimmt ist, das Absperrorgan (42) des Ventilkolbens (4) in Ausgangsposition zu empfangen, wobei das Modul (3) bezüglich des Gehäuses (2) bewegbar ist zwischen einer Offenposition, die das Einsetzen des Ventilkolbens (4) in die Aufnahme erlaubt, und einer Geschlossen-Position, in welcher das Modul (3) an dem Gehäuse (2) fixiert ist,
- Fluidverbinden der Stromaufwärts-Passage (33) mit dem Reservoir (102) oder der Stromabwärts-Leitung (102).

9. Verfahren zum Transferieren eines Fluid in ein Reservoir oder in eine Stromabwärts-Leitung gemäß Anspruch 8, **dadurch gekennzeichnet, dass** es die folgenden Schritte aufweist:
- Bereitstellen eines Systems (7) zum pneumatischen oder hydraulischen Ansteuern des Absperrorgans (42),
- Ansteuern des Ventilkolbens (4) mit dem Ansteuer-System (7), um zu veranlassen, dass das Absperrorgan (42) des Ventilkolbens (4) von der Ausgangsposition aus in die Einfahr-Position passiert, dadurch erlaubend das Passieren des Fluid von dem Stromaufwärts-Kanal (22) in den Stromabwärts-Abführkanal (33).

## Claims

1. Equipment (1) for transferring fluid into a reservoir (102) or a downstream pipe (102), the equipment comprising:
- a piston valve (4) having a body (40) and a rod (41) comprising at its end a closing member (42),
- a chassis (2) defining a housing (21) for receiving the piston valve (4) and an upstream passage (22) for the fluid intended to be fluidly connected to a fluid source (101), ,
- a module (3) defining a downstream discharge passage (33) intended to be fluidly connected to the reservoir or downstream pipe (102), the inlet of the discharge passage (33) defining a valve seat (32) intended to receive the closing member (42) of the piston valve (4) in the deployed position,
**characterized in that** the piston valve (4) is mobile in translation in an insertion direction (D1), between a non-inserted position in which the piston valve (4) is located outside the housing (21), and an inserted position in which the piston valve (4) is located in the housing (21),
**in that** the module (3) defines a cavity (31) for receiving the fluid from the upstream passage (22), and
**in that** the module (3) is movable relative to the chassis (4) between an open position, allowing the piston valve (4) to be inserted in the housing (21), and a closed position, in which the module (3) is fastened to the chassis (2).

2. The equipment (1) according to claim 1, **characterized in that** the piston valve (4) comprises a pneumatic or hydraulic control system (7) of the closing member (42), the control system (7) comprising a supply orifice (72) defined by the body (40), and **in that** two sealing gaskets (43, 44) ensuring sealing of the supply orifice (72) with the chassis (2).

3. The equipment (1) according to claim 1, **characterized in that** two sealing gaskets (43, 44) form drawstrings closed around the axial direction (D1) and are respectively compressed substantially in the insertion direction (D1) between the piston valve (4) and the chassis (2), and between the piston valve (4) and the module (3) when the piston valve (4) is in the inserted position and the module (3) is in the closed position.

4. The equipment (1) according to any one of claims 1 and 2, **characterized in that** the chassis (2) defines at least one upstream channel (23) intended to be connected to a fluid suction and/or vacuum line, said at least one upstream channel (23) communicating with a downstream channel (34) of the module (3), the downstream channel (34) being connected to the downstream passage (33) below the valve seat (32).

5. The equipment (1) according to claim 4, **characterized in that** the at least one upstream channel (23) emerges in a housing (25) able to receive a coaxial valve (6), said coaxial valve (6) being cylindrical and comprising sealing gaskets (61, 62) on its two end surfaces (a, b), opposed in the insertion direction (D2) and compressed substantially in the insertion direction (D2) between the coaxial valve (6) and the chassis (2) and between the coaxial valve (6) and the module (3) when the coaxial valve (6) is in the inserted position and the module is in the closed position.

6. The equipment (1) according to claim 5, **characterized in that** the lower ends of the valves (4, 6) are situated in the same plane (P) when they are in the inserted position, and **in that** the module (3) in the closed position presses on this plane (P) so as to keep said valves (4, 6) in their respective housings (21, 25).

7. The equipment (1) according to claim 6, **characterized in that** the valves (4, 6) do not comprise a fastening system in the chassis (2) and **in that** in the open position, the module (3) allows the valves (4, 6) to be released from their housings.

8. A method for transferring a fluid into a reservoir (102) or into a downstream pipe (102), comprising the following steps:
- providing a piston valve (4) having a body (40) and a rod (41) comprising at its end a closing member (42),
- providing a chassis (3) defining a housing (21) for receiving the piston valve (4) and an upstream passage (22) for the fluid and being intended to be fluidly connected to a fluid source (101), the piston valve (4) being mobile in translation in an insertion direction (D1), between a non-inserted position in which the piston valve (4) is located outside the housing (21), and an inserted position in which the piston valve (4) is located in the housing (21),
- fluidly connecting the upstream passage (101) to a fluid source,
- providing a module (3) defining a cavity (31) for receiving the fluid from the upstream passage (22) and a downstream discharge passage (33) intended to be fluidly connected to the reservoir (101) or downstream pipe, the inlet of the discharge passage (33) defining a valve seat (32) intended to receive the closing member (42) of the piston valve (4) in the deployed position, the module (3) being movable relative to the chassis (2) between an open position, allowing the piston valve (4) to be inserted in the housing, and a closed position, in which the module (3) is fastened to the chassis (2),
- fluidly connecting the downstream passage (33) to the reservoir (102) or downstream pipe (102).

9. A method for transferring a fluid into a reservoir or into a downstream pipe according to claim 8, **characterized in that** it comprises the following steps:
- providing a pneumatic or hydraulic control system (7) for the closing member (42),
- controlling the piston valve (4) with the control system (7) to cause the closing member (42) of the piston valve (4) to go from the deployed position to the withdrawn position, allowing the fluid to pass from the upstream channel (22) to the downstream discharge channel (33).
